# EUROPEAN PATENT APPLICATION

(11) **EP 4 131 507 A1**
(43) Date of publication of application: **08.02.2023**
(21) Application number: 22787438.5
(22) Date of filing: 08.04.2022
(51) Int. Cl.: H01M 4/62, H01M 4/525, H01M 10/0525

(54) **LITHIUM SUPPLEMENTARY ADDITIVE, PREPARATION METHOD THEREFOR AND APPLICATION THEREOF**

(30) Priority: 12.04.2021 CN 202110387946
(71) Applicant: Shenzhen Dynanonic Innovazone New Energy Technology Co., Ltd., Shenzhen, Guangdong 518000 (CN)
(72) Inventor: ZHAO, Zhongke, Shenzhen, Guangdong 518000 (CN); PEI, Xianyinan, Shenzhen, Guangdong 518000 (CN); KONG, Lingyong, Shenzhen, Guangdong 518000 (CN); WAN, Yuanxin, Shenzhen, Guangdong 518000 (CN); ZHONG, Zeqin, Shenzhen, Guangdong 518000 (CN); REN, Wangbao, Shenzhen, Guangdong 518000 (CN)
(74) Representative: Meroni, Francesca
(86) International application number: PCT/CN2022/085708
(87) International publication number: WO 2022/218212

(57) **Abstract**

The present application discloses a lithium supplement additive and a preparation method and application thereof. The lithium supplement additive has a core-shell structure, which includes a core body and a shell layer coated on the core body. The core body is a lithium-source core body for supplying lithium, and the shell layer is a functional capsulation layer, and the functional capsulation layer includes a dense isolating capsulation layer which completely covers the lithium-source core body. The lithium supplement additive of the present application can release as much lithium ions as possible at one time to compensate the irreversible consumption of the lithium ions by the formation of the SEI on the anode, thereby maintaining the abundance of lithium ions in the battery system, and improving the first-time efficiency and an overall electrochemical performance of the lithium-ion battery. The preparation method of the lithium supplement additive can ensure the stability of the structure and electrochemical performance of the lithium supplement additive prepared, with high efficiency and low production costs.

## Description

This application claims the benefit of Chinese patent application No. 202110387946.8, titled "Lithium supplement additive, and preparation method and application thereof" filed on April 12, 2021, the contents of which are incorporated herein by reference.

### TECHINICAL FIELD

The present application relates to the field of lithium-ion batteries, and in particular, relates to a lithium supplement additive, a preparation method thereof and a cathode material and a lithium-ion battery.

### BACKGROUND

With increasing public awareness of environmental protection and energy crisis, lithium-ion batteries become more and more popular as a green and environmental-friendly energy storage technology. Lithium-ion batteries are widely used because of their high capacity densities, long cycle time, and high stability. With the widespread application of electronic products and the vigorous development of electric vehicles, the lithium-ion batteries market also grows, along with increasing requirements for specific capacity and cycling performance of the lithium-ion batteries.

During the first-time charging and discharging process of a lithium-ion battery, a layer of solid electrolyte interface (SEI) is formed on the surface of the anode, which converts a large amount of active lithium into lithium carbonate, lithium fluoride and alkyl lithium, resulting in lithium loss in the cathode material, thereby reducing the initial coulombic efficiency and capacity of the battery. Around 10% of the lithium source is consumed during the first-time charging process in the lithium-ion battery system using a graphite anode, while even more lithium source is consumed in the systems adopting anodes materials with a higher specific capacity, such as alloys (silicon, tin, etc.), oxides (silicon oxide, tin oxide) and amorphous carbon anodes.

In order to further improve the energy density of lithium-ion batteries, pre-lithiation of the cathode and anode is considered as an efficient method. However, the current supplementary lithium additive for the anode has the shortcomings of excessively high activity and a poor stability, thus increasing the operation difficulty and production risk. Therefore, relatively safe and easy-to-operate cathode lithium supplementation processes have received more and more attention. However, the poor conductivity of the conventional anti-fluorite-type cathode lithium supplement material leads to serious polarization during charging, so that the theoretical specific capacity of the cathode lithium supplement material cannot be fully achieved.

### TECHNICAL PROBLEMS

In order to tackle the above-mentioned technical problem that the existing lithium supplement additive cannot achieve its full theoretical specific capacity, the present application provides a lithium supplement additive and a preparation method thereof.

Another objective of the present application is to provide a lithium-ion battery, in order to solve the technical problems of unsatisfactory initial coulombic efficiency and battery capacity of the existing lithium-ion batteries.

### TECHNICAL PROPOSALS

An aspect of the present application provides a lithium supplement additive. The lithium supplement additive has a core-shell structure, which includes a core body and a shell layer coated on the core body. The core body is a lithium-source core body for supplying lithium, and the shell layer is a functional capsulation layer, and the functional capsulation layer includes a dense isolating capsulation layer which completely covers the lithium-source core body.

Another aspect of the present application provides a preparation method of the lithium supplement additive, including:
preparing a lithium-source particulate material for supplying lithium; and
forming a functional capsulation layer on a surface of the lithium-source particulate material, such that the functional capsulation layer includes a dense isolating capsulation layer which completely covers the lithium-source particulate material.

Yet another aspect of the present application provides a cathode material, which includes the lithium supplement additive of the present application or a lithium supplement additive prepared by the preparation method of the present application.

Still yet another aspect of the present application provides a lithium-ion battery, which includes a cathode, the cathode includes a current collector and a cathode active layer bound on a surface of the current collector, and the cathode active layer is doped with the lithium supplement additive of the present application or a lithium supplement additive prepared by the preparation method of the present application.

The present application has the following beneficial effects compared with the existing technology:
The core body in the lithium supplement additive of the present application is served as a lithium-source core body, which ensures that the lithium supplement additive provides abundant lithium as a "sacrificing agent" during the first cycle of charging, by releasing as much lithium ions as possible at one time to compensate the irreversible consumption of the lithium ions resulted from the formation of the SEI layer on the anode, so as to maintain the abundance of lithium ions in the battery system and improve the initial coulombic efficiency and overall electrochemical performance of the battery. The functional capsulation layer in the lithium supplement additive can effectively protect the lithium-source core body, so that the lithium-source core body is isolated from external moisture and carbon dioxide, thereby ensuring the effectiveness of the lithium-source core body, and ensuring the stability and uniformity of dispersion of the lithium supplement additive in the electrode active paste and active layers as well as a good processing performance.

The preparation method of the lithium supplement additive in the present application can effectively prepare particles with the core-shell structure, such that the functional capsulation layer effectively covers the core body, thereby ensuring the stability and uniformity of dispersion of the lithium supplement additive in the electrode active paste and active layers as well as a good processing performance. Additionally, the preparation method of the lithium supplement additive can ensure the stability of the structure and the electrochemical performance of the lithium supplement additive prepared, with high efficiency and low production costs.

The cathode material provided by the present application includes the above-mentioned lithium supplement additive, thus serves as a "sacrificing agent" during the first cycle of charging, by releasing as much lithium ions as possible at one time to compensate the irreversible consumption of the lithium ions resulted from the formation of the SEI layer on the anode, so as to maintain the abundance of lithium ions in the battery system and improve the initial coulombic efficiency and overall electrochemical performance of the battery. Moreover, since the lithium supplement additive included can effectively isolate external moisture and carbon dioxide, a stable lithium-supplying performance and a stable performance in application can be achieved by the cathode material of the present application.

The lithium-ion battery of the present application includes the above-mentioned lithium supplement additive, thus the anode has good cycle performance and low internal resistance, which results in excellent initial coulombic efficiency, good battery capacity and cycle performance, long service life, and stable electrochemical performance in the lithium-ion battery of the present application.

### BRIEF DESCRIPTION OF THE DRAWINGS

In order to more clearly illustrate the technical proposals in embodiments of the present application, accompanying drawings that are used in the description of the embodiments or exemplary technologies are briefly introduced hereinbelow. Obviously, the drawings in the following description are merely some embodiments of the present application. For those skilled in the art, other drawings can also be obtained according to these drawings without any creative effort.
FIG. 1 is a structural schematic diagram of a lithium-supplement additive according to an embodiment of the application, where FIG. 1A shows a primary particulate core, and FIG. 1B shows a secondary particulate core;
FIG. 2 is a schematic diagram showing a structure of the lithium supplement additive shown in FIG. 1;
FIG. 3 is a schematic diagram showing another structure of the lithium supplement additive shown in FIG. 1;
FIG. 4 is a schematic diagram showing a third structure of the lithium supplement additive shown in FIG. 1;
FIG. 5 is a schematic diagram showing a fourth structure of the lithium supplement additive shown in FIG. 1;
FIG. 6 is a color distribution diagram of the core body of the lithium supplement additive on the standard material color chart in the industry according to the embodiment of the present application;
FIG. 7 is a color distribution diagram of a carbon shell layer of the lithium supplement additive on the standard material color chart in the industry according to the embodiment of the present application;
FIG. 8 is a flowchart of the preparation method of the lithium supplement additive according to an embodiment of the present application;
FIG. 9 is an SEM image of an LFO core body of the lithium supplement additive according to Example 1;
FIG. 10 is an SEM image of the core body of the lithium supplement additive according to Example 1; and
FIG. 11 is a diagram showing the specific capacities in the first-time charging process of lithium-ion batteries including the lithium supplement additive in Example 1 and the LFO without a capsulation layer in Comparative example 1.

### DETAILED DESCRIPTION OF THE EMBODIMENTS

In order to make the purpose, technical proposals, and advantages of the present application more clearly understood, the present application will be described in further detail hereinbelow with reference to the embodiments. It should be understood that the specific embodiments described herein are merely used to explain the present application, but not to limit the present application.

In this application, the term "and/or", which describes the relationship between related objects, means that there can be three relationships, for example, A and/or B, which can represent circumstances that A exists alone, A and B exist at the same time, and B exists alone, where A and B can be singular or plural. The character "/" generally indicates that the associated objects are in an "or" relationship.

In this application, "at least one" means one or more, and "a plurality of" means two or more. "At least one item below" or similar expressions refer to any combination of these items, including any combination of single item or plural items. For example, "at least one of a, b, or c" can mean: a, b, c, a-b (i.e., a and b), a-c, b-c, or a-b-c, where a, b, and c can be singular or plural respectively.

It should be understood that, in various embodiments of the present application, the numbers of the above-mentioned processes do not imply the sequence of execution, some or all of the steps may be executed in parallel or sequentially, and the execution sequence of each process should be based on its functions and determined by the internal logic, and should not constitute any limitation on the implementation process of the embodiments of the present application.

The terms used in the embodiments of the present application are merely for the purpose of describing specific embodiments, and are not intended to limit the present application. Unless clearly dictated otherwise, the singular forms "a", "the" and "said" as used in the embodiments of this application and the appended claims intended to include the plural forms as well.

The weight of the relevant compositions mentioned in the examples of this application can not only refer to the specific content of each composition, but also represent the proportional relationship between the weights of the compositions. It is within the scope disclosed in the embodiments of the present application that the content of the compositions is proportionally scaled up or down. Specifically, the mass described in the description of the embodiments of the present application may be a mass unit known in the chemical field, such as µg, mg, g and kg.

The terms "first" and "second" are merely used for descriptive purposes to distinguish objects such as substances from each other, and cannot be understood as indicating or implying relative importance or implying the number of indicated technical features. For example, without departing from the scope of the embodiments of the present application, "the first" may also be referred to as "the second", and similarly, "the second" may also be referred to as "the first". Thus, a feature defined as "first" or "second" may expressly or implicitly include one or more of the features.

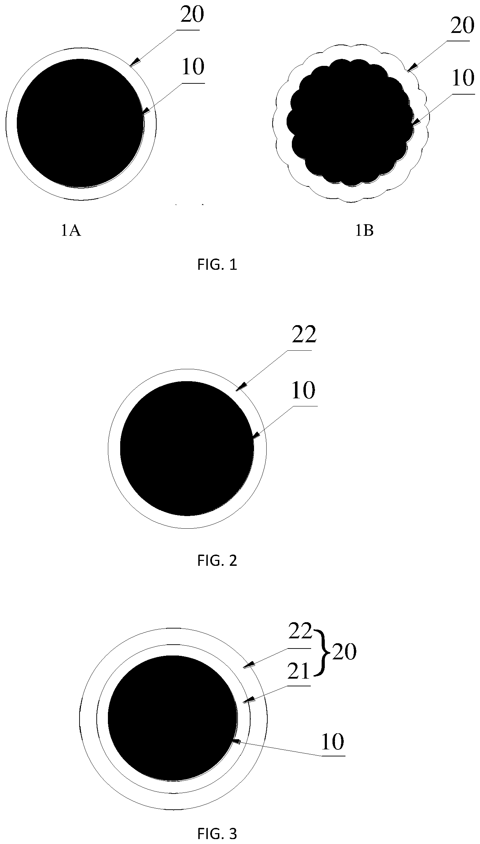

In an aspect, an embodiment of the present application provides a lithium supplement additive. The lithium supplement additive as shown in FIGS. 1 to 5 is a particulate material having a core-shell structure, which includes a core body 10 and a shell layer 20 coated on the core body 10.

The core body 10 is served as a lithium-source core body for supplying lithium. The lithium-source core body has abundant lithium source, which ensures that the lithium supplement additive in an electrode provides abundant lithium as a "sacrificing agent" during the first cycle of charging. By releasing as much lithium ions as possible at one time, the irreversible consumption of the lithium ions resulted from the formation of the SEI layer on the anode is compensated, so as to maintain the abundance of lithium ions in the battery system and improve the initial coulombic efficiency and overall electrochemical performance of the battery.

In this embodiment, the lithium-source core body is LiₓA_{1-y-4z/3}B_{y}C_{z}O_{3/2+x/2}, where A is selected from Fe and Ni, and B and C represents doping metal elements with different valencies, and 1 ≤ x ≤ 6, 0 ≤ y ≤ 0.5, 0 ≤ z ≤ 0.375, and 0 ≤ 6y+8z ≤ 3. The doped lithium source can provide abundant lithium, and can effectively release lithium during the first cycle of charging, and compensate the irreversible consumption of the lithium ions resulted from the formation of the SEI layer on the anode, so as to enhance the lithium content in the lithium cathode material in the electrode and improve the capacity and cycle performance of the electrode. The doping elements B and C in the lithium-source core body can slow the reaction of lithium and metal A with air, thereby inhibiting the formation of residual alkali from the lithium supplement additive, so that the lithium supplement additive exhibits good stability.

The presence of the doping elements B and C in LiₓA_{1-y-4z/3}B_{y}C_{z}O_{3/2+x/2} increases the number of crystal defects, which widens the ion transportation channel, so that the lithium in the core body 10 is able to detach more easily. In an embodiment, the doping element B includes at least one of Al, Co, Ni, Fe, Ga, and La; in other embodiments, the doping element C includes at least one of Mn, Ge, Sn, Ti, Si, V, and Zr. That is, by controlling the types of the doping elements B and/or C, the above-described effects of the doping elements can be further enhanced.

In an embodiment, the lithium-source core body may be at least one of a primary particle and a secondary particle. The primary particle is shown in FIG. 1A, and the secondary particle is shown in FIG. 1B. In other embodiments, the particle size of the lithium-source core body is between 50 nm and 10 µm. Specifically, when the lithium-source core body is a primary particle as shown in FIG. 1A, the particle size of the primary particle, namely the lithium-source core body, is between 50 nm and 500 nm; and when the lithium-source core body is a secondary particle as shown in FIG. 1B, the particle size of the secondary particle, namely the lithium-source core body, is between 100 nm and 10 µm. The secondary particle is formed by aggregation of one or more primary particles. By controlling the particle form and particle size of the lithium-source core body, abundant lithium ions can be provided, and the processability of the lithium supplement additive in the preparation of lithium battery paste can be improved. Furthermore, more lithium can be released from the primary particles with smaller particle sizes.

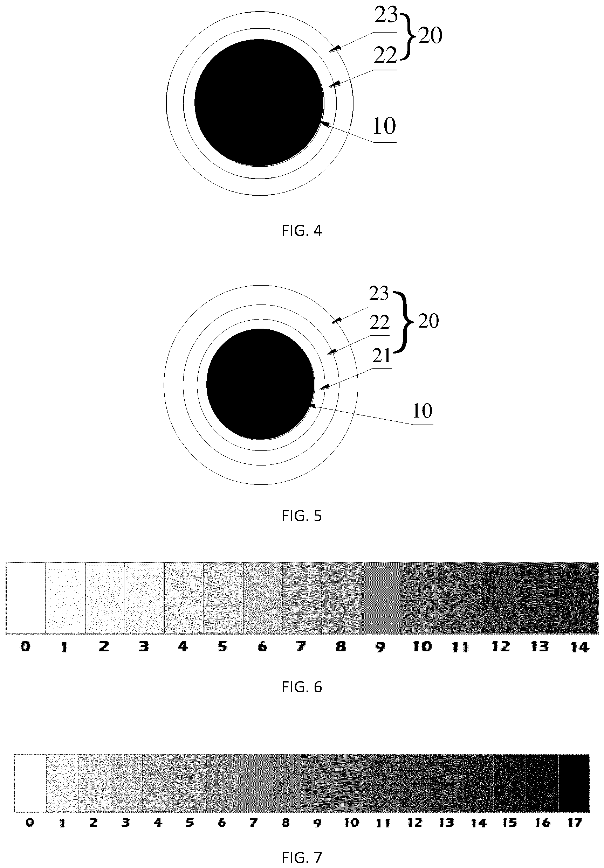

It is found by the inventors that, the lithium-source core body in the above-mentioned embodiments, such as LiₓA_{1-y-4z/3}B_{y}C_{z}O_{3/2+x/2}, exhibits certain colors. Table 1 shows the standard color chart of materials in the industry, with fifteen grades from 0 to 14. As shown in FIG. 6, the color of the lithium-source core body in the above-mentioned embodiments, such as LiₓA_{1-y-4z/3}B_{y}C_{z}O_{3/2+x/2}, falls in the range of the color chart. It is further found that there is a correlation between the color and purity of the lithium-source core body in the above-mentioned embodiments, such as LiₓA_{1-y-4z/3}B_{y}C_{z}O_{3/2+x/2}, for example, the higher the purity of the lithium-source core body such as LiₓA_{1-y-4z/3}B_{y}C_{z}O_{3/2+x/2}, the lower the color grade in the standard color chart. As the lithium-source core body in the above-mentioned embodiments, such as LiₓA_{1-y-4z/3}B_{y}C_{z}O_{3/2+x/2}, is in contact with moisture and carbon dioxide, the resultant change in its compositions causes a lower purity, which then results in a change in the color exhibited and thus a higher grade in the color chart. Accordingly, the greater the deterioration in its compositions, the lower the purity, thereby exhibiting a color with a higher grade. Therefore, in the embodiments, the color exhibited by the lithium-source core body in the above-mentioned embodiments, such as LiₓA_{1-y-4z/3}B_{y}C_{z}O_{3/2+x/2}, is between grades 2 to 6, and further, between grades 2 to 3.

**Table 1**

| Standard Color Chart | | | | | | |
|---|---|---|---|---|---|---|
| Grade | Color Mode | | | | | |
| | RGB | | | HSL | | |
| | Red (R) | Green (G) | Blue (B) | Hue (H) | Saturation (S) | Lightness (L) |
| 0 | 255 | 255 | 255 | - | - | 255 |
| 1 | 253 ≤ R < 255 | 253 ≤ G < 255 | 250 ≤ B < 255 | 55 ≤ L < 60 | 95 < S ≤ 100 | 250 ≤ L < 255 |
| 2 | 250 ≤ R < 253 | 250 ≤ G < 253 | 240 ≤ B < 250 | 50 ≤ L < 55 | 95 < S ≤ 100 | 245 ≤ L< 250 |
| 3 | 245 ≤ R < 250 | 245 ≤ G < 250 | 235 ≤ B < 240 | 45 ≤ L< 50 | 95 < S ≤ 100 | 240 ≤ L< 245 |
| 4 | 235 ≤ R < 245 | 235 ≤ G < 245 | 215 ≤ B < 235 | 40 ≤ L< 45 | 100 <S ≤ 105 | 225 ≤ L< 240 |
| 5 | 230 ≤ R < 235 | 225 ≤ G < 235 | 190 ≤ B < 215 | 35 ≤ L< 40 | 105 < S ≤ 110 | 210 ≤ L< 225 |
| 6 | 220 ≤ R < 230 | 205 ≤ G < 225 | 170 ≤ B < 190 | 30 ≤ L< 35 | 110 < S ≤ 115 | 195 ≤ L < 210 |
| 7 | 215 ≤ R < 220 | 185 ≤ G < 205 | 145 ≤ B < 170 | 25 ≤ L< 30 | 115 < S ≤ 120 | 180 ≤ L< 195 |
| 8 | 210 ≤ R < 215 | 165 ≤ G < 185 | 120 ≤ B < 145 | 20 ≤ L< 25 | 120 < S ≤ 125 | 165 ≤ L< 180 |
| 9 | 205 ≤ R < 210 | 135 ≤ G < 165 | 95 ≤ B < 120 | 15 ≤ L < 20 | 125 < S ≤ 130 | 150 ≤ L< 165 |
| 10 | 200 ≤ R < 205 | 100 ≤ G < 135 | 70 ≤ B < 95 | 10 ≤ L< 15 | 130 < S ≤ 135 | 135 ≤ L< 150 |
| 11 | 185 ≤ R < 200 | 70 ≤ G < 100 | 55 ≤ B < 70 | 5 ≤ L < 10 | 135 < S ≤ 140 | 120 ≤ L< 135 |
| 12 | 165 ≤ R < 185 | 45 ≤ G < 70 | 45 ≤ B < 55 | 0 ≤ L < 5 | 140 < S ≤ 145 | 105 ≤ L< 120 |
| 13 | 145 ≤ R < 165 | 35 ≤ G < 45 | 35 ≤ B < 45 | 0 ≤ L < 5 | 145 < S ≤ 150 | 90 ≤ L< 105 |
| 14 | 120 ≤ R < 145 | 30 ≤ G < 35 | 30 ≤ B < 35 | 0 ≤ L < 5 | 150 < S ≤ 155 | 75 ≤ L< 90 |

Additionally, it is found that a good stability of the lithium-source core body in the above-mentioned embodiments, such as LiₓA_{1-y-4z/3}B_{y}C_{z}O_{3/2+x/2}, can be maintained under the following conditions,

The relative humidity of the storage environment at 25°C ≤ 5%, namely dew point temperature ≤ -15°C. Preferably, ambient relative humidity ≤ 1%, namely dew point temperature ≤ -30°C. More preferably, ambient relative humidity ≤ 0.1 %, namely dew point temperature ≤ -50°C. Carbon dioxide content in the storage environment at 25°C ≤ 200 ppm. Preferably, the carbon dioxide content ≤ 100 ppm. More preferably, the carbon dioxide content ≤ 50 ppm.

Moreover, even though the lithium-source core body in the above-mentioned embodiments, such as LiₓA_{1-y-4z/3}B_{y}C_{z}O_{3/2+x/2}, is rich in lithium, however, it is reactive with water and carbon dioxide. Consequently, the lithium supplying effect of the lithium supplement additives in the embodiments of the present application is reduced, and the processibility thereof or the processibility of materials containing the lithium-source core body like LiₓA_{1-y-4z/3}B_{y}C_{z}O_{3/2+x/2} is hence reduced. Moreover, the viscosity of the material containing the lithium-source core body like LiₓA_{1-y-4z/3}B_{y}C_{z}O_{3/2+x/2}, such as paste is also lowered, such that the fluidity thereof is too low for subsequent processing steps. Therefore, based on the lithium-source core body, such as LiₓA_{1-y-4z/3}B_{y}C_{z}O_{3/2+x/2}, in the above-mentioned embodiments, the shell layer 20 in the lithium supplement additive in the above-mentioned embodiments is configured as a functional capsulation layer. The functional capsulation layer includes a dense isolating capsulation layer 22, and the isolating capsulation layer 22 completely covers the lithium-source core body (the core body 10). Since the functional capsulation layer (shell layer 20) includes the dense isolating capsulation layer 22, which completely covers the lithium-source core body, the lithium-source core body is effectively protected from moisture and carbon dioxide in the ambient environment. Therefore, the lithium supplying effect of the lithium-source core body can be ensured, and a good stability and uniform distribution, as well as good processibility, of the lithium supplement additive in the electrode active paste and the electrode active layer can be achieved.

As shown in FIG. 2, the functional capsulation layer may be a separate isolating capsulation layer 22, which completely covers and protects the lithium-source core body from water and carbon dioxide in the ambient environment. In an embodiment, the thickness of the isolating capsulation layer 22 is between 5 nm and 200 nm, and further is between 5 nm and 50 nm. In another embodiment, the material of the isolating capsulation layer 22 includes at least one of ceramics, high-molecular polymers, and carbon materials. In a specific embodiment, the ceramics include at least one of Al₂O₃, SiO₂, boehmite, Si₃N₄, SiC, and BN.

In an embodiment, the polymers include at least one of an organic polymer with a structure of [C₆H₇O₆Na]ₙ, an organic polymer with a structure of [C₆H₇O₂(OH)₂OCH₂COONa]ₙ, an organic polymer with a structure of [C₃H₄O₂]n, and an organic polymer with a structure of [C₃H₃O₂Ma]ₙ, an organic polymer with a structure of [C₃H₃N]ₙ, an organic polymer containing a structure of -[CH₂-CF₂]ₙ-, an organic polymer containing a structure of -[NHCO]-, an organic polymer containing an imide ring, -[CO-N-CO]-, in the main chain, and polyvinylpyrrolidone, where Ma is a alkali metal element. In some embodiments of the present application, the polymers include at least one of polyvinylidene fluoride, sodium alginate, sodium carboxymethyl cellulose, polyacrylic acid, polyacrylate, polyacrylonitrile, polyamide, polyimide, polyvinylpyrrolidone, polyethylene oxide (PEO), polypyrrole (PPy), polytetrafluoroethylene (PTFE), and polyurethane (PU). In some embodiments of the present application, the polymers include at least one of sodium carboxymethyl cellulose and polyacrylic acid. Sodium carboxymethyl cellulose and polyacrylic acid are two-dimensional polymers with good bonding ability, which can effectively coat the core of lithium-rich materials, thereby avoiding the core of lithium-rich materials from air, such that the stability of lithium supplement additive can be improved. In the embodiment of the present application, the molecular weights of the polymers are greater than or equal to 100,000. The molecular weights of the polymers can be specifically, but not limited to, 100,000, 150,000, 200,000, 300,000, 500,000, or 1 million. The larger the molecular weight of the polymer, the higher the density and structural strength of the polymer layer, which can provide better protection to the inner core of the lithium-rich material.

In an embodiment, the carbon material includes at least one of graphene, carbon nanotubes, amorphous carbon, graphite, and carbon black. By adjusting the material and thickness of the isolating capsulation layer 22, the lithium source core body can be further protected from water and carbon dioxide, and the stability of the lithium-source core body can be improved.

In an embodiment, the functional capsulation layer further includes at least one of an ionic conductor capsulation layer and an electronic conductor capsulation layer. The functional capsulation layer having a composite multi-layer structure is formed by the at least one of the ionic conductor capsulation layer and the electronic conductor capsulation layer with the isolating capsulation layer 22, so as to coat and protect the lithium-source core body. In addition, in the composite functional capsulation layer formed by the at least one of the ionic conductor capsulation layer and the electronic conductor capsulation layer with the isolating capsulation layer 22, the layers are stacked or coated from the core body 10 toward the shell layer 20. The sequence of the at least one of the ionic conductor capsulation layer, the electronic conductor capsulation layer and the isolating capsulation layer 22 can be random, and relatively preferably, the composite structure of the functional capsulation layer as in the following embodiments can be adopted.

In a specific embodiment, as shown in FIG. 3, the functional capsulation layer includes the isolating capsulation layer 22 and the ionic conductor capsulation layer 21. The lithium-source core body is coated with the ionic conductor capsulation layer 21, and the ionic conductor capsulation layer 21 is coated with the isolating capsulation layer 22.

In another specific embodiment, as shown in FIG. 4, the functional capsulation layer includes the isolating capsulation layer 22 and the electronic conductor capsulation layer 23. The lithium-source core body is coated with the isolating capsulation layer 22, and the isolating capsulation layer 22 is coated with the electronic conductor capsulation layer 23.

In yet another specific embodiment as shown in FIG. 5, the functional capsulation layer includes the isolating capsulation layer 22, the electronic conductor capsulation layer 23, and the ionic conductor capsulation layer 21. The lithium-source core body is coated with the ionic conductor capsulation layer 21, and the ionic conductor capsulation layer 21 is coated with the isolating capsulation layer 22, and the isolating capsulation layer 22 is coated with the electronic conductor capsulation layer 23.

The ionic conductor capsulation layer 21 in the above-mentioned composite functional capsulation layer can enhance the ionic conductivity of the functional capsulation layer, thereby enhancing the ionic conductivity of the lithium supplement additive, which is beneficial to the outward transport of lithium ions from the lithium-source core body. Meanwhile, after the lithium-source core body releases all the lithium ions as a sacrificing agent, the ionic conductor capsulation layer 21 can also be further exploited to enhance the ion transport inside the electrode. Based on the function of the ionic conductor capsulation layer 21, it may have a dense structure or a porous structure, and it may provide a full coating or partial coating. In an embodiment, the thickness of the ionic conductor capsulation layer 21 is between 5 nm and 200 nm, and further between 5 nm and 50 nm. In another embodiment, the material of the ionic conductor capsulation layer 21 includes at least one of perovskite solid-state electrolyte, NaSICON solid-state electrolyte, garnet solid-state electrolyte or polymer solid-state electrolyte. In a specific embodiment, the perovskite solid electrolyte includes Li₃ₓLa_{2/3-x}TiO₃ (LLTO), such as at least one of Li_{0.5}La_{0.5}TiO₃, Li_{0.33}La_{0.57}TiO₃, Li_{0.29}La_{0.57}TiO₃, Li_{0.33}Ba_{0.25}La_{0.39}TiO₃, (Li_{0.33}La_{0.56})_{1.005}Ti_{0.99}Al_{0.01}O₃, and Li_{0.5}La_{0.5}Ti_{0.95}Zr_{0.05}O₃. The NaSICON solid electrolyte includes, but not limited to, Li_{1.4}Al_{0.4}Ti_{1.6}(PO₄)₃(LATP). The garnet solid electrolyte includes at least one of Li₇La₃Zr₂O₁₂ (LLZO), Li_{6.4}La₃Zr_{1.4}Ta_{0.6}O₁₂, and Li_{6.5}La₃Zr_{1.5}Ta_{0.5}O₁₂. The polymer solid electrolyte includes at least one of PEO/PPO/PVDF or the like in which lithium salts are dissolved. The ionic conductivity of the ionic conductor capsulation layer 21 can be further improved by adjusting the thickness and material thereof.

The electronic conductor capsulation layer 23 in the above-mentioned composite functional capsulation layer can enhance the electronic conductivity of the functional capsulation layer, thereby enhancing the electronic conductivity of the lithium supplement additive, which aids in reducing the internal impedance of the electrode. Moreover, after the lithium-source core body releases all the lithium ions as a sacrificing agent, the electronic conductor capsulation layer 23 can be further exploited to act as a conductive agent inside the electrode. Based on the function of the electronic conductor capsulation layer 23, it may have a dense structure or a porous structure, and it may provide a full coating or partial coating. In an embodiment, the thickness of the electronic conductor capsulation layer 23 is between 5 nm and 200 nm, and further between 5 nm and 50 nm. In another embodiment, the material of the electronic conductor capsulation layer 23 includes at least one of carbon material, conductive polymer, and conductive oxide. In a specific embodiment, the carbon material includes at least one of mesoporous carbon, carbon nanotubes, graphite, carbon black, graphene and the like. The conductive polymer may include, but not limited to, the above-mentioned conductive polymers in the isolating capsulation layer 22. The conductive oxide includes at least one of In₂O₃, ZnO, and SnO₂. The electronic conductivity of the electronic conductor capsulation layer 23 can be further improved by adjusting the thickness thereof.

Since the materials of the isolating capsulation layer 22 and the electronic conductor capsulation layer 23 can both be carbon materials, therefore, when both materials are carbon materials, the isolating capsulation layer 22 and the electronic conductor capsulation layer 23 can be configured into an integrated structure. With this configuration, the carbon material coating layer has the above-mentioned functions of the isolating capsulation layer 22 and the electronic conductor capsulation layer 23 at the same time. When the carbon material is the outermost layer of the functional capsulation layer, referring to the standard greyscale color chart of materials in the industry as demonstrated in Table 2, which has a total of eighteen grades from 0 to 17. It is found that the apparent greyscale of the lithium supplement additive with the carbon material as the outermost layer of the functional capsulation layer is correlated with the density of the carbon material. Specifically, the smaller the density of the carbon coating layer, namely the lower the coating coverage, the lower the greyscale, which also represents a worse isolation effect of the functional capsulation layer, and a worse functional of the electronic conductor layer. On the other hand, the greater the density of the carbon coating layer, that is, the higher the coating coverage, the darker the color, and the greater the greyscale, which represents a better isolation effect, and a better function of the electronic conductor. Therefore, in the embodiments of the present application, the apparent greyscale of the lithium supplement additive with the carbon material as the outermost layer of the functional capsulation layer is between grades 9 and 17, and further between grades 12 and 16.

**Table 2**

| Greyscale Color Chart | | | | | | |
|---|---|---|---|---|---|---|
| Grade | Color Mode | | | | | |
| | RGB | | | HSL | | |
| | Red (R) | Green (G) | Blue (B) | Hue (H) | Saturation (S) | Lightness (L) |
| 0 | 255 | 255 | 255 | - | 0 | 255 |
| 1 | 240 ≤ R < 255 | G = R | B = R | - | 0 | 240 ≤ L < 255 |
| 2 | 225 ≤ R < 240 | G = R | B = R | - | 0 | 225 ≤ L < 240 |
| 3 | 210 ≤ R < 225 | G = R | B = R | - | 0 | 210 ≤ L < 225 |
| 4 | 195 ≤ R < 210 | G = R | B = R | - | 0 | 195 ≤ L < 210 |
| 5 | 180 ≤ R < 195 | G = R | B = R | - | 0 | 180 ≤ L < 195 |
| 6 | 165 ≤ R < 180 | G = R | B = R | - | 0 | 165 ≤ L < 180 |
| 7 | 150 ≤ R < 165 | G = R | B = R | - | 0 | 150 ≤ L < 165 |
| 8 | 135 ≤ R < 150 | G = R | B = R | - | 0 | 135 ≤ L < 150 |
| 9 | 120 ≤ R < 135 | G = R | B = R | - | 0 | 120 ≤ L < 135 |
| 10 | 105 ≤ R < 120 | G = R | B = R | - | 0 | 105 ≤ L < 120 |
| 11 | 90 ≤ R < 105 | G = R | B = R | - | 0 | 90 ≤ L< 105 |
| 12 | 75 ≤ R < 90 | G = R | B = R | - | 0 | 75 ≤ L< 90 |
| 13 | 60 ≤ R < 75 | G = R | B = R | - | 0 | 60 ≤ L< 75 |
| 14 | 45 ≤ R < 60 | G = R | B = R | - | 0 | 45 ≤ L< 60 |
| 15 | 30 ≤ R < 45 | G = R | B = R | - | 0 | 30 ≤ L< 45 |
| 16 | 15 ≤ R < 30 | G = R | B = R | - | 0 | 15 ≤ L< 30 |
| 17 | 0 ≤ R < 15 | G = R | B = R | - | 0 | 0 ≤ L < 15 |

The specific surface area of the lithium supplement additive in the above-mentioned embodiments is in a range of 0.1-5.0 m²/g. The specific surface area of the lithium supplement additive is controlled within this range, as a smaller specific surface area can reduce the contact area between the lithium supplement additive and the air, thereby reducing the sensitivity of the material to the ambient environment, and can also reduce the overall viscosity of the electrode paste to improve processability.

In addition, in the lithium supplement additive of the above-mentioned embodiments, the dispersion of the lithium supplement additive is alkaline, and in an embodiment, the pH of the aqueous dispersion of the lithium supplement additive is 7-14 when the concentration thereof is 0.1 g/50 mL.

The testing method of the pH of the dispersion of the lithium supplement additive is as follows: dispersing 0.1 g of the sealed lithium supplement additive material in 50 mL of distilled water at the room temperature of 25°C, and stirring for 30 seconds.

It is further found that the alkalinity of the lithium supplement additive in the above-mentioned embodiments cannot be altered, and that the strong alkalinity leads to an increase in the viscosity of the cathode paste containing the lithium supplement additives, and even loss of fluidity. As a result, the cathode paste containing the lithium supplement additive cannot be used for electrode coating and subsequent production processes, which increases the difficulty of the preparation process of cathode paste. Therefore, a lithium supplement additive with a lower alkalinity is desired in the embodiments of the present application. Therefore, in the above-mentioned embodiments, the pH of the aqueous dispersion of the lithium supplement additive is 7-14, and further, pH ≤ 12, when the concentration thereof is 0.1 g/50 mL.

In addition, in order to improve the stability of the lithium supplement additive, an ideal storage condition is that the relative humidity of the environment at 25°C ≤ 50%, that is, the dew point temperature ≤ 15°C. Preferably, the ambient relative humidity ≤ 20%, that is, the dew point temperature ≤ 0°C. More preferably, the ambient relative humidity ≤ 10%, that is, the dew point temperature ≤ -10°C. The carbon dioxide content in the storage environment at 25°C ≤ 500 ppm, preferably, the carbon dioxide content ≤ 400 ppm.

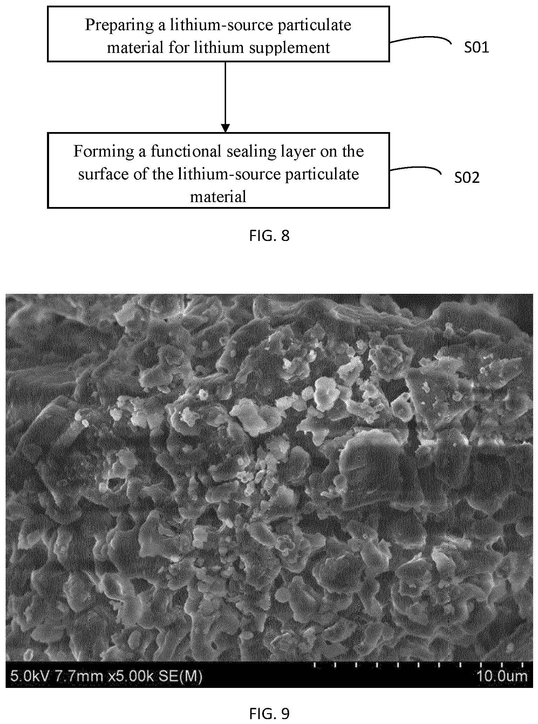

Accordingly, an embodiment of the present application also provides a preparation method of the above-mentioned lithium supplement additive. Referring to the preparation method of the lithium supplement additive shown in FIG. 8, and in combination with FIGS. 1 to 5, the preparation method includes the following steps:
Step S01: preparing a lithium-source particulate material for supplying lithium; and
Step S02: forming a functional capsulation layer on a surface of the lithium-source particulate material.

The lithium-source particulate material in the step S01 is the core body 10, that is, the lithium-source core body of the lithium supplement additive in the above-mentioned embodiments. The functional capsulation layer in step S02 is the shell layer 20, that is, the functional capsulation layer of the lithium supplement additive in the above-mentioned embodiments. Therefore, for the briefness of description, the lithium-source particulate material in step S01 and the functional capsulation layer in step S02 are not repeated herein.

The lithium-source particulate material may be prepared according to existing methods for preparing a lithium additive material that is rich in lithium. For example, the preparation method may be an existing method for preparing LiₓA_{1-y-4z/3}B_{y}C_{z}O_{3/2+x/2}, when the lithium supplement additive is LiₓA_{1-y-4z/3}B_{y}C_{z}O_{3/2+x/2} as described above.

In addition, since the core body 10, namely the lithium-source core body is sensitive to water and carbon dioxide as explained above, in an embodiment, the prepared lithium-source particulate material is stored under the following conditions, so as to improve the stability of the lithium-supplying performance and the like of the lithium-source particulate material:
The relative humidity in a storage environment at 25°C ≤ 5%, namely the dew point temperature ≤ -15°C. Preferably, the ambient relative humidity ≤ 1 %, namely the dew point temperature ≤ -30°C, more preferably, the ambient relative humidity ≤ 0.1%, namely the dew point temperature ≤ -50°C. The carbon dioxide content in the storage environment at 25°C ≤ 200 ppm, preferably, the carbon dioxide content ≤ 100 ppm, more preferably, the carbon dioxide content ≤ 50 ppm.

The method for forming the functional capsulation layer in the step S02 can be arranged according to the structure of the functional capsulation layer in the lithium supplement additive in the above-mentioned embodiments. In an embodiment, when the functional capsulation layer is the isolating capsulation layer 22 as shown in FIG. 2, a dense full-covering isolating capsulation layer 22 is formed on the surface of the lithium-source particulate material according to the method for forming an isolating capsulation layer, where the method includes the following steps:
forming an isolating capsulation layer 22 coating the lithium-source particles on the surface of the lithium-source particles, and the isolating capsulation layer 22 includes at least one of ceramics, high-molecular polymers and carbon materials.

In a specific embodiment, when the isolating capsulation layer 22 is a ceramic layer, the ceramic isolating capsulation layer 22 may be deposited by sputtering a ceramic target on the surface of the lithium-source particles by means of, but not limited to, magnetron sputtering. The conditions of magnetron sputtering can be adjusted according to the specific properties of the target.

In another specific embodiment, when the isolating capsulation layer 22 is a high-molecular polymer layer, the method for forming the high-molecular polymer isolating capsulation layer 22 includes the following steps:
dispersing the lithium-source particulate material in a solution containing a high-molecular polymer, and then vacuum-drying to form a dense polymer isolating capsulation layer 22 on the surface of the lithium-source particles. The solvent of the solution is a solvent capable of uniformly dispersing or dissolving the high-molecular polymer, including such as one or more of N-methyl pyrrolidone, methanol, ethanol, isopropanol, acetone, tetrahydrofuran and diethyl ether.

In another specific embodiment, when the isolating capsulation layer 22 is a carbon material layer, the method for forming the carbon material isolating capsulation layer 22 includes the following steps:
dispersing the lithium source particle material in a solution containing a carbon source, and performing carbonization treatment after drying to form a dense carbon isolating capsulation layer 22 on the surface of the lithium source particles. The carbon source may be, but not limited to, PEO, and may be other carbon sources, as long as being capable to form a carbon coating layer on the surface of the lithium-source particles. Specifically, for example, the lithium-source particulate material is uniformly mixed with PEO, and the surface of the lithium-source particles is uniformly coated at the melting point of the PEO of 300°C, and then the coated material is sintered in the presence of inert gas at 600°C for 16 hours. A dense carbon layer is formed after sintering.

In another embodiment, when the functional capsulation layer is the ionic conductor capsulation layer 21 and the isolating capsulation layer 22 as shown in FIG. 3, the method for forming the functional capsulation layer on the surface of the lithium-source particulate material includes the following steps:
forming an ionic conductor capsulation layer 21 on the surface of the lithium-source particulate material, and then forming the above-mentioned isolating capsulation layer 22 on an outer surface of the ionic conductor capsulation layer 21 which covers the ionic conductor capsulation layer 21.

In a further embodiment, a precursor material for forming the ionic conductor capsulation layer 21 is mixed with the lithium-source particulate material, and the ionic conductor capsulation layer 21 is formed on the surface of the lithium-source particulate material according to the method for forming the ionic conductor capsulation layer. Then, the above-mentioned isolating capsulation layer 22 is formed on the outer surface of the ionic conductor capsulation layer 21 and covers the ionic conductor capsulation layer 21.

When the ionic conductor capsulation layer 21 is at least one of perovskite solid-state electrolyte, NaSICON solid-state electrolyte, garnet solid-state electrolyte or polymer solid-state electrolyte, the precursor material for forming the ionic conductor capsulation layer 21 includes the precursor of the perovskite solid-state electrolyte, NaSICON solid-state electrolyte, garnet solid-state electrolyte or polymer solid-state electrolyte, and the method and conditions for forming the ionic conductor capsulation layer 21 are arranged according to the method for forming the perovskite solid-state electrolyte, NaSICON solid-state electrolyte, garnet solid-state electrolyte or polymer solid-state electrolyte.

In another embodiment, when the functional capsulation layer is the electronic conductor capsulation layer 23 and the isolating capsulation layer 22 as shown in FIG. 4, the method for forming the functional capsulation layer on the surface of the lithium-source particulate material includes the following steps:
forming the above-mentioned isolating capsulation layer 22 covering the lithium-source particles on the surface of the lithium-source particles, and then forming the electronic conductor capsulation layer 23 on the outer surface of the isolating capsulation layer 22.

In a further embodiment, the above-mentioned isolating capsulation layer 22 covering the lithium-source particles is formed on the surface of the lithium-source particles, then the precursor material for forming the electronic conductor capsulation layer 23 and the lithium-source particulate material coated with the isolating capsulation layer 22 is mixed, the electronic conductor capsulation layer 23 is formed on the outer surface of the isolating capsulation layer 22 according to the method for forming the electronic conductor capsulation layer 23.

When the material of the electronic conductor capsulation layer 23 is at least one of carbon materials, conductive polymers or conductive oxides, the precursor material for forming the electronic conductor capsulation layer 23 includes a precursor material of the carbon materials, the conductive polymers or the conductive oxides. The carbon materials, conductive polymers, and conductive oxides are the same as the materials of the above-mentioned electronic conductor capsulation layer 23 in the lithium supplement additive. The precursor materials of the carbon materials, the conductive polymers or the conductive oxides are also the precursor materials for forming the above-mentioned carbon materials, conductive polymers or conductive oxides, respectively. The method and conditions of forming the electronic conductor capsulation layer 23 made of carbon materials, conductive polymers and conductive oxides are arranged according to the method and conditions of forming the carbon materials, the conductive polymers or the conductive oxides.

In another embodiment, when the functional capsulation layer is the electronic conductor capsulation layer 23, the isolating capsulation layer 22 and the ionic conductor capsulation layer 21 as shown in FIG. 5, the method of forming the functional capsulation layer on the surface of the lithium-source particulate material includes the following steps:
forming an ionic conductor capsulation layer 21 on the surface of the lithium-source particulate material, then forming an isolating capsulation layer 22 covering the ionic conductor capsulation layer 21 on the outer surface of the ionic conductor capsulation layer 21, and forming an electronic conductor capsulation layer 23 on the outer surface of the isolating capsulation layer 22.

In a further embodiment, the precursor material for forming the ionic conductor capsulation layer 21 is mixed with the lithium-source particulate material, and the ionic conductor capsulation layer 21 is formed on the surface of the lithium-source particulate material according to the method for forming the ionic conductor capsulation layer 21. The isolating capsulation layer 22 is formed on the outer surface of the ionic conductor capsulation layer 21, then the precursor material forming the electronic conductor capsulation layer 23 is mixed with the lithium-source particulate material having the isolating capsulation layer 22 formed on the surface thereof, and the electronic conductor capsulation layer 23 is formed on the outer surface of the isolating capsulation layer 22 according to the method for forming the electronic conductor capsulation layer 23. The methods and materials for forming the ionic conductor capsulation layer 21, the isolating capsulation layer 22 and the electronic conductor capsulation layer 23 can be arranged according to the respective method and materials for forming the ionic conductor capsulation layer 21, the isolating capsulation layer 22 and the electronic conductor capsulation layer 23.

In addition, an ideal environment for storing the prepared lithium supplement additive is as follows: the relative humidity of the environment at 25°C ≤ 50%, that is, the dew point temperature ≤ 15°C. Preferably, the ambient relative humidity ≤ 20%, that is, the dew point temperature ≤ 0°C, more preferably, the ambient relative humidity ≤ 10%, that is, the dew point temperature ≤ -10°C. The carbon dioxide content in the storage environment at 25°C ≤ 500 ppm, preferably, the carbon dioxide content ≤ 400 ppm.

Therefore, the above-mentioned preparation method of the lithium supplement additive can effectively prepare particles with a core-shell structure, and the functional capsulation layer can effectively coat the core body, thereby ensuring the stability of the prepared lithium supplement additive in the electrode active paste and the electrode active layer, as well as the uniform distribution and good processibility thereof. Moreover, the properties of the prepared lithium supplement additive can be optimized by controlling the materials and processing conditions of the core body 10 and the shell layer 20. In addition, the preparation method of the lithium supplement additive can ensure the stability of the structure and electrochemical performance of the prepared lithium supplement additive, with high efficiency and low production costs.

Another aspect of the present application provides a cathode material, a cathode, and a lithium-ion battery including the cathode.

The cathode material includes the lithium supplement additive of the above-mentioned embodiments. Obviously, the cathode material may include other cathode materials in the technical field of lithium-ion battery. Since the cathode material provided by the present embodiment includes the above-mentioned lithium supplement additive, thus the lithium supplement additive in the cathode material serves as a "sacrificing agent" during the charging and discharging processes, in order to compensate the irreversible consumption of the lithium ions resulted from the formation of the SEI layer on the anode. Therefore, the abundance of lithium ions in the battery system can be maintained and the initial coulombic efficiency and overall electrochemical performance of the battery can be improved. Moreover, since the lithium supplement additive in the cathode material can effectively isolate external moisture and carbon dioxide, a stable lithium-supplying performance and a stable application performance can be achieved by the cathode material.

The cathode may be a conventional cathode of a lithium-ion battery, such as including a current collector and a cathode active layer bound on the surface of the current collector. The cathode current collector includes, but not limited to, either one of copper foil and aluminum foil.

The cathode active layer includes the lithium supplement additive in the above-mentioned embodiments. In one embodiment, the mass content of the above-mentioned lithium supplement additive in the cathode active layer is in a range of 0.1-50%, and preferably, 0.5-20%, more preferably, 1-10%. The cathode active layer also includes an electrode active material, a binder and a conductive agent in addition to the lithium supplement additive. The binder includes one or more of polyvinylidene chloride, soluble polytetrafluoroethylene, styrene-butadiene rubber, Hypromellose, methyl cellulose, carboxymethyl cellulose, polyvinyl alcohol, acrylonitrile copolymer, sodium alginate, chitosan and chitosan derivatives. In the embodiments of the present application, the conductive agent includes one or more of graphite, carbon black, acetylene black, graphene, carbon fiber, C60 and carbon nanotubes. Electrode active material includes one or more of lithium cobalt oxide, lithium manganate, lithium iron phosphate, lithium vanadium phosphate, lithium vanadium oxide phosphate, lithium vanadium fluorophosphate, lithium titanate, lithium nickel cobalt manganate, and lithium nickel cobalt aluminate. In an embodiment, the preparation of the cathode is as follows: obtaining an electrode paste by mixing the electrode active material, the lithium supplement additive, the conductive agent and the binder, coating the current collector with the electrode paste, which is then followed by drying, rolling, die-cutting and the like.

A lithium-ion battery of the embodiments of the present application includes the cathode. Obviously, the lithium-ion battery in the embodiment of the present application also includes necessary components for a lithium-ion battery such as an anode, a separator, an electrolyte and the like.

Since the cathode material includes the above-mentioned lithium supplement additive, thus serves as a "sacrificing agent" during the first cycle of charging of the lithium-ion battery, by releasing as much lithium ions as possible at one time to compensate the irreversible consumption of the lithium ions resulted from the formation of the SEI layer on the anode Therefore, the abundance of lithium ions in the battery system can be maintained, and the initial coulombic efficiency and overall electrochemical performance such as capacity and cycling performance of the lithium-ion battery of the present embodiment can be improved. In addition, when the cathode includes at least one of the above-mentioned ionic conductor capsulation layer 21 and the above-mentioned electronic conductor capsulation layer 23, the functional capsulation layer can be further exploited to enhance ionic and electronic conductivity of the electrode, after the lithium supplement additive as the sacrificing agent in the cathode releases all lithium ions.

The following examples illustrate the lithium-supplementing additives and their preparation methods and applications in the embodiments of the present application.

### I. Lithium supplement additive and the preparation method thereof

### Example 1

This example provides a lithium supplement additive and a preparation method thereof. The structure of the lithium supplement additive is shown in FIG. 1, which includes an LFO core 1 and a functional capsulation layer 20 made of a dense carbon layer coated on the surface of the LFO core body 10. The average particle size of the LFO core body 10 is 1.2 µm, and the thickness of the dense carbon layer is 200-300 nm.

The preparation method of the lithium supplement additive of the present example includes the following steps:
S1: preparing the LFO core body 1.

Fe₂O₃ and LiOH are used as an iron source a lithium source for the synthesis of Li4FeO4, respectively. The raw materials are ball-milled and mixed, with the molar ratio between Fe (and doping elements) and Li of 1:5. The mixture is sintered as follows: 1. heating from the room temperature to 850°C at a heating rate of 5 K/min; 2. maintaining the temperature at 850°C for 24 hours; and 3. cooling to the room temperature. The sintering process is carried out in the presence of argon gas, and the material of the LFO core is obtained.

S2: preparing the functional capsulation layer 2.

PVDF is dissolved in NMP, and the mass fraction of PVDF is controlled to be 2.5%. After the dissolution is completed, 1 g of LFO material is added into 10 mL of the solution, and the mixture is stirred at a rate of 600 rpm at 40°C for 24 hours. The stirring process is conducted in a glove box filled with argon. The mixture is then filtered, and the drained residue is sintered as follows: 1. heating from the room temperature to 400°C at a heating rate of 5 K/min; 2. maintaining the temperature at 400°C for 10 hours; and 3. cooling to the room temperature. The sintering process is carried out in the presence of argon gas, and the LFO fully covered with a dense carbon coating is obtained.

### Example 2

This example provides a lithium supplement additive and a preparation method thereof. The structure of the lithium supplement additive is shown in FIG. 2 or 5, which includes an LFO core 10, an LATP ionic conductor layer coated on the LFO core body 10, and a dense carbon layer fully covering the LATP ionic conductor layer. A functional capsulation layer 20 is formed by the LATP ionic conductor layer and the dense carbon layer.

The preparation method of the lithium supplement additive of the present example includes the following method:
S1: preparing the LFO core body 10 according to the step S1 in Example 1 to obtain an LFO core material;
S2: preparing the functional capsulation layer 20.

The powder of the LFO core material and the powder of the ionic conductor material LATP is ball-milled and mixed with a mass ratio between the core material and the ionic conductor material LATP of 19:1, so that the LATP particles are attached uniformly on the surface of the LFO core material. The above composite material is dissolved in an appropriate amount of PVDF solution in NMP, and is stirred evenly, and the mixture is dried to evaporate the solvent to obtain a composite material further coated with PCDF. The composite material is sintered in argon gas to obtain a material with a functional capsulation layer containing LFO/LATP/C, where the LATP layer is an ionic conductor layer, the C layer is an isolating capsulation layer and also an electronic conductor capsulation layer.

### Example 3

This example provides a lithium supplement additive and a preparation method thereof. The structure of the lithium supplement additive is shown in FIG. 2 or 5, which includes an LFO core 10, an LLTO ionic conductor layer coated on the LFO core body 10, a dense Al₂O₃ isolating capsulation layer fully covering the LLTO ionic conductor layer, and a polypyrrole electronic conductor capsulation layer formed on the surface of the dense Al₂O₃ isolating capsulation layer. A functional capsulation layer 20 is formed by the LLTO ionic conductor layer, the dense Al₂O₃ isolating capsulation layer, and the polypyrrole electronic conductor capsulation layer.

The preparation method of the lithium supplement additive of the present example includes the following method:
S1: preparing the LFO core body 10 according to the step S1 in Example 1 to obtain an LFO core material;
S2: preparing the functional capsulation layer 20.

The powder of the LFO core material and the powder of the ionic conductor material LLTO is ball-milled and mixed with a mass ratio between the core material and the ionic conductor material LLTO of 19:1, so that the LLTO particles are attached uniformly on the surface of the LFO core material. The mixture is then sintered, and a dense Al₂O₃ layer is deposited on the surface of the LLTO layer by magnetron sputtering. The polypyrrole solution is fully mixed with the particles coated with the Al₂O₃ layer, and then is dried.

### Comparative example 1

An LFO material prepared according to the Example 1 is provided. That is, the LFO material in the Comparison example 1 does not contain the dense carbon functional capsulation layer as in the Example 1.

### II. Lithium-Ion battery

The lithium supplement additive provided in the above-mentioned Examples 1 to 3 and the lithium supplement additive provided in the comparative example are assembled into a cathode and a lithium-ion battery according to the following methods:
Cathode: the lithium supplement additives provided in the above Examples 1 to 3 are respectively mixed with SP and PVDF, with the ratio of lithium supplement additive: SP: PVDF as 95: 2: 3, by ball milling for 60 min at a speed of 30 Hz. The mixtures are made into a cathode plate respectively after homogenization, coating, drying, and cutting. The cathode plate is then baked in a vacuum oven at 100°C to remove traces of water (in this example, the lithium supplement additive is directly used as the active material to test the lithium storage performance). The LFO in the Comparative example 1 is mixed with SP and PVDF, with the ratio of LFO: SP: PVDF as 95: 2: 3, and the cathode of the Comparative example 1 is prepared according to the foregoing preparation method of the cathode.
Anode: lithium metal plate.

Assembly of the lithium-ion battery: the button battery is assembled in glove box filled with an inert gas, following the order of anode casing-stainless steel gasket-lithium metal plate-diaphragm-electrolyte-cathode plate-cathode casing. The model of the button battery casing (including anode casing, the stainless steel gasket and cathode casing) is CR2032, manufactured by Canrd. The lithium metal plate has a diameter of 16 mm and is manufactured by Tianjin China Energy Lithium. The electrolyte is a LiPF6 solution with a concentration of 1 mol/L, and the solvent is composed of EC (ethylene carbonate) and DEC (diethyl carbonate) at a volume ratio of 1:1. The diaphragm is a PE diaphragm manufactured by Shanghai Semcorp.

### Related properties testing

### 1. Properties of the lithium supplement additive

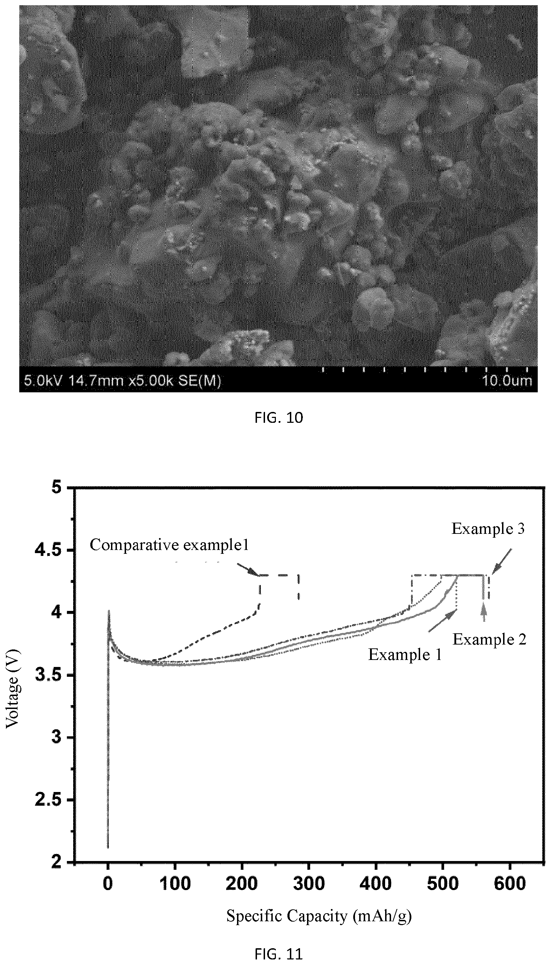

The lithium supplement additives of Examples 1 to 3 are observed with SEM. The SEM image of the LFO core body 1 in Example 1 is shown in FIG. 9, and the SEM image of the lithium supplement additive with a dense carbon layer of functional capsulation layer 2 in Example 1 is shown in FIG. 10. It can be found in FIGS. 9 and 10, the dense carbon layer on the surface of the LFO core material of the lithium supplement additive in Example 1 acts both as an isolating capsulation layer and an electronic conductor capsulation layer, which prevents the core material from water and carbon dioxide. Therefore, the electronic conductivity of the material is improved, and the internal impedance of the electrode is reduced. Moreover, after the lithium supplement additive releases all the lithium ions as a sacrificing agent, the electronic conductor capsulation layer can be further exploited to act as a conductive agent inside the electrode. In Examples 2 and 3, in addition to the beneficial effects in the Example 1, since an additional LATP ionic conductor layer is provided, the outward transport of lithium ions from the LFO material is promoted for more sufficient release of lithium.

### 2. Electrochemical performance of the lithium-ion battery

The specific capacities in the first-time charging process of the lithium-ion batteries including the lithium supplement additives of Examples 1 to 3 and the lithium-ion battery including the LFO of Comparative example 1 are respectively tested according to the following methods:
charging at 0.05 C to 4.3 V, maintaining a constant voltage of 4.3 V until the current is less than 0.01 C, and testing the specific capacity during the first-time charging process. The testing is conducted by the battery testing cabinet LANHE-CT3001 produced by Wuhan Landian Electronics Co., Ltd.

The specific capacities in the first-time charging process of the lithium-ion batteries including the lithium supplement additives of Examples 1 to 3 and the lithium-ion battery including the LFO without capsulation layer of Comparative example 1 are shown in FIG. 11. It can be seen from FIG. 11, when charging at 4.3 V, the specific capacity of the lithium-ion battery including the lithium supplement additive of Example 1 reaches above 500 mAh/g, while the specific capacity of the lithium-ion battery including the LFO without capsulation layer of Comparative example 1 is about 250 mAh/g, which indicates that, with the capsulation layer, the capacity of LFO is increased by 100%. The specific capacity of the lithium-ion battery including the lithium supplement additive having a functional capsulation layer of Example 2 is above 550 mAh/g when charging at 4.3 V, and the specific capacity of the lithium-ion battery of Example 3 is higher than that of the lithium-ion battery of Example 2.

The specific capacities in the first-time charging process of other lithium-ion batteries including the lithium supplement additive of the examples of the present application show similar trends with those in FIG. 11. Therefore, the lithium supplement additive provided by embodiments of the present application can ensure the amount of lithium ions in the lithium-ion battery system, and enhance the first coulombic efficiency, as well as the capacity and cycling performance, of the lithium-ion battery of the present application.

The above descriptions are merely preferred embodiments of the present application and are not intended to limit the present application. Any modifications, equivalent replacements and improvements made within the spirit and principles of the present application shall fall within the scope of protection of the present application.

## Claims

1. A lithium supplement additive having a core-shell structure, the core-shell structure comprising:
a core body; and
a shell layer coated on the core body;
wherein the core body is a lithium-source core body for supplying lithium, and the shell layer is a functional capsulation layer, and the functional capsulation layer comprises a dense isolating capsulation layer which completely covers the lithium-source core body.

2. The lithium supplement additive according to claim 1, wherein the lithium-source core body is LiₓA_{1-y-4z/3}B_{y}C_{z}O_{3/2+x/2}, A is selected from Fe and Ni, and B and C represent doping metal elements with different valencies, and 1 ≤ x ≤ 6, 0 ≤ y ≤ 0.5, 0 ≤ z ≤ 0.375, and 0 ≤ 6y+8z ≤ 3.

3. The lithium supplement additive according to claim 2, wherein
the doping element B comprises at least one of Al, Co, Ni, Fe, Ga, and La; and/or
the doping element C comprises at least one of Mn, Ge, Sn, Ti, Si, V, and Zr.

4. The lithium supplement additive according to any of claims 1 to 3, wherein
the lithium-source core body is at least one of a primary particle and a secondary particle; and/or
a particle size of the lithium-source core body is between 50 nm and 10 µm; and/or
an apparent color of the lithium-source core body corresponds to grades 2 to 6 in a standard color chart.

5. The lithium supplement additive according to any of claims 1 to 3, wherein
a thickness of the isolating capsulation layer is between 5 nm and 200 nm; and/or
a material of the isolating capsulation layer comprises at least one of a ceramic, a high-molecular polymer, and a carbon material.

6. The lithium supplement additive according to claim 5, wherein the ceramic comprises at least one of Al₂O₃, SiO₂, boehmite, Si₃N₄, SiC, and BN.

7. The lithium supplement additive according to claim 5, wherein the carbon material comprises at least one of graphene, carbon nanotubes, amorphous carbon, graphite, and carbon black.

8. The lithium supplement additive according to claim 5, wherein the polymer comprises at least one of an organic polymer with a structure of [C₆H₇O₆Na]ₙ, an organic polymer with a structure of [C₆H₇O₂(OH)₂OCH₂COONa]ₙ, an organic polymer with a structure of [C₃H₄O₂]n, an organic polymer with a structure of [C₃H₃O₂Mₐ]ₙ, an organic polymer with a structure of [C₃H₃N]ₙ, an organic polymer containing a structure of -[CH₂-CF₂]ₙ-, an organic polymer containing a structure of -[NHCO]-, an organic polymer containing an imide ring, -[CO-N-CO]-, in a main chain, and polyvinylpyrrolidone, where Mₐ is an alkali metal element.

9. The lithium supplement additive according to any of claims 1 to 3, wherein the functional capsulation layer further comprises at least one of an ionic conductor capsulation layer and an electronic conductor capsulation layer, and the functional capsulation layer having a composite multi-layer structure is formed by the at least one of the ionic conductor capsulation layer and the electronic conductor capsulation layer with the isolating capsulation layer, so as to cover and protect the lithium-source core body.

10. The lithium supplement additive according to claim 9, wherein
the functional capsulation layer comprises the isolating capsulation layer and the ionic conductor capsulation layer, the lithium-source core body is coated with the ionic conductor capsulation layer, and the ionic conductor capsulation layer is coated with the isolating capsulation layer; or
the functional capsulation layer comprises the isolating capsulation layer and the electronic conductor capsulation layer, the lithium-source core body is coated with the isolating capsulation layer, and the isolating capsulation layer is coated with the electronic conductor capsulation layer; or
the functional capsulation layer comprises the isolating capsulation layer, the electronic conductor capsulation layer, and the ionic conductor capsulation layer, the lithium-source core body is coated with the ionic conductor capsulation layer, and the ionic conductor capsulation layer is coated with the isolating capsulation layer, and the isolating capsulation layer is coated with the electronic conductor capsulation layer.

11. The lithium supplement additive according to claim 9, wherein
a thickness of the electronic conductor capsulation layer is between 5 nm and 200 nm; and/or
a material of the electronic conductor capsulation layer comprises at least one of a carbon material, a conductive polymer, and a conductive oxide.

12. The lithium supplement additive according to claim 9, wherein
a thickness of the ionic conductor capsulation layer is between 5 nm and 200 nm; and/or
a material of the ionic conductor capsulation layer comprises at least one of a perovskite solid-state electrolyte, a NaSICON solid-state electrolyte, a garnet solid-state electrolyte, and a polymer solid-state electrolyte.

13. The lithium supplement additive according to any of claims 5 to 12, wherein an outermost layer of the functional capsulation layer is made of carbon, and an apparent greyscale of the lithium supplement additive corresponds to grades 9 to 17 in a standard greyscale color chart.

14. The lithium supplement additive according to any of claims 1 to 13, wherein
a specific surface area of the lithium supplement additive is in a range of 0.1-5.0 m²/g; and/or
an aqueous dispersion of the lithium supplement additive is alkaline.

15. A preparation method of a lithium supplement additive, comprising:
preparing a lithium-source particulate material for lithium supplement; and
forming a functional capsulation layer on a surface of the lithium-source particulate material, such that the functional capsulation layer comprises a dense isolating capsulation layer which completely covers the lithium-source particulate material.

16. The preparation method according to claim 15, wherein the step of forming a functional capsulation layer on a surface of the lithium-source particulate material further comprises:
forming the isolating capsulation layer on the surface of the lithium-source particulate material such that the isolating capsulation layer covers the lithium-source particulate material, wherein the isolating capsulation layer comprises at least one of a ceramic, a high-molecular polymer and a carbon material; or
forming an ionic conductor capsulation layer on the surface of the lithium-source particulate material, and then forming the isolating capsulation layer on an outer surface of the ionic conductor capsulation layer such that the isolating capsulation layer covers the ionic conductor capsulation layer, wherein the isolating capsulation layer comprises at least one of a ceramic, a high-molecular polymer and a carbon material; or
forming the isolating capsulation layer on the surface of the lithium-source particulate material such that the isolating capsulation layer covers the lithium-source particulate material, and then forming an electronic conductor capsulation layer on an outer surface of the isolating capsulation layer, wherein the isolating capsulation layer comprises at least one of a ceramic, a high-molecular polymer and a carbon material; or
forming the ionic conductor capsulation layer on the surface of the lithium-source particulate material, then forming the isolating capsulation layer on the outer surface of the ionic conductor capsulation layer such that the isolating capsulation layer covers the ionic conductor capsulation layer, and forming an electronic conductor capsulation layer on the outer surface of the isolating capsulation layer, wherein the isolating capsulation layer comprises at least one of a ceramic, a high-molecular polymer and a carbon material.

17. A cathode, comprising the lithium supplement additive according to any of claims 1 to 14, or comprising a lithium supplement additive prepared by the preparation method according to claim 15 or 16.

18. A lithium-ion battery, comprising a cathode which has a current collector and a cathode active layer bound on a surface of the current collector, wherein
the cathode active layer is doped with the lithium supplement additive according to any of claims 1 to 14, or a lithium supplement additive prepared by the preparation method according to claim 15 or 16.
